# EUROPÄISCHE PATENTSCHRIFT

(11) **EP 1 952 140 B1**
(45) Veröffentlichungstag und Bekanntmachung des Hinweises auf die Patenterteilung: **22.07.2015**
(21) Anmeldenummer: 06818644.4
(22) Anmeldetag: 17.11.2006
(51) Int. Cl.: G01N 31/22

(54) **Organobasierter Sauerstoff-Scavenger/-Indikator**
Organic oxygen scavenger/indicator
Capteur/indicateur d'oxygène à base organique

(30) Priorität: 22.11.2005 DE 102005055633
(43) Veröffentlichungstag der Anmeldung: 06.08.2008
(73) Patentinhaber: Fraunhofer-Gesellschaft zur Förderung der angewandten Forschung e.V., 80686 München (DE)
(72) Erfinder: LANGOWSKI Horst-Christian, 85406 Zolling (DE); WANNER, Thomas, 86529 Schrobenhausen (DE)
(74) Vertreter: Pfenning, Meinig & Partner GbR
(86) Internationale Anmeldenummer: PCT/EP2006/011076
(87) Internationale Veröffentlichungsnummer: WO 2007/059901

(56) Entgegenhaltungen:
- WO-A1-02/099416
- US-A- 2 685 516
- US-A- 3 134 673
- US-A- 4 289 645
- US-A- 4 626 411
- US-A- 4 971 918

## Beschreibung

Die Erfindung betrifft einen Sauerstoff-Scavenger/-Indikator, der mindestens eine Substanz mit kombinierter Scavenger- und Indikatorfunktion für Sauerstoff, die unter Einwirkung von Feuchtigkeit unter basischen Bedingungen Sauerstoff absorbieren kann, sowie mindestens eine basisch reagierende Verbindung enthält. Die Indikatorwirkung wird durch eine Änderung von mindestens einer physikalischen Eigenschaft der Substanz mit kombinierter Scavenger- und Indikatorfunktion für Sauerstoff bewirkt, wobei die Änderung durch die Einwirkung von Feuchtigkeit getriggert wird.

O₂-Scavenger sind Stoffe, die Sauerstoff sorbieren können. Unter Sorption sind hier alle bekannten Sorptionsmöglichkeiten, z.B. Adsorption, Absorption, Chemiesorption und Physisorption, zu verstehen. Die derzeit nach dem Stand der Technik etablierten Systeme lassen sich hier primär nach dem O₂-Scavenger-Substrat und nach ihrem Initialisierungsmechanismus qualifizieren. Hierbei unterscheidet man die folgenden Gruppen:
- anorganische O₂-Scavenger, z.B. eisenbasierte oder sulfidbasierte Systeme
- niedermolekulare organische O₂-Scavenger, z.B. ascarbotbasierte Systeme
- hochmolekulare organische O₂-Scavenger, z.B. polyolefinbasierte oder polyamidbasierte Systeme

O₂-Scavenger werden dabei entweder durch UV-Strahlung oder durch Feuchtigkeit initialisiert. Dies bedeutet, dass die O₂-Scavenger-Funktion erst nach einer Exposition mit UV-Strahlung bzw. Wasser, d.h. Luftfeuchte, vorhanden ist.

Indikatorsysteme im allgemeinen lassen sich in Time-Temperature-Indicator (TTI)-, Gas/Leakage-Indicator- und Freshness-Indicator-Systeme einteilen.

Ein TTI integriert die Zeit-Temperatur-Historie eines Produkts und macht somit eine direkte Aussage über dessen Lagerbedingungen. Die Indikatorwirkung wird durch eine chemische Reaktion oder durch gegenläufige Diffusion zweier Farbstoffe bewirkt.

Gas-Leakage-Indikatoren detektieren die Gaskonzentration von O₂, CO₂ oder H₂O im Verpackungsraum. Sie machen somit eine indirekte Aussage über die Qualität des Produktes. Die Indikatorwirkung wird durch eine chemische Reaktion mit den Reaktanden O₂, CO₂ oder H₂O hervorgerufen.

Freshness-Indikatoren detektieren die Stoffwechselprodukte von Mikroorganismen und machen somit eine direkte Aussage über die Qualität des Produktes. Die Indikatorwirkung wird durch eine chemische Reaktion der Stoffwechselprodukte hervorgerufen.

All diesen Indikatorsystemen ist gemein, dass die Indikatorwirkung durch einen sichtbaren Farbumschlag wiedergegeben wird.

Somit gibt es im Stand der Technik eine Vielzahl von O₂-Scavenger-Systemen, aber nur eine verschwindend geringe Anzahl von Gas-Leakage-Indikator-Systemen.

Besonders für den Verpacker als auch den Vertreiber von Produkten (Lebensmitteln) wäre jedoch die Information wichtig, wie sich die Kopfraumatmosphäre in der Verpackung verhält. Desweiteren ist mit der Etablierung von aktiven Verpackungen mit O₂-Scavengern das Wissen nach der Restzehrkapazität der Verpackung (z.B. zum Zeitpunkt des Verpackens) von höchstem Interesse.

In WO 02/099416 wird ein Gegenstand beschrieben, der sowohl einen O₂-Scavenger als auch einen O₂-Indikator enthält, wobei letzterer eine lumineszente Verbindung enthält. Der O₂-Scavenger und der O₂-Indikator sind dabei im Wesentlichen von Sauerstoffquellen außerhalb des Gegenstandes abgeschirmt.

Kombinierte O₂-Scavenger/Indikator-Systeme sind derzeit im Stand der Technik nicht bekannt. Bei diesen arbeitet der O₂-Scavenger unabhängig vom O₂-Indikator, d.h. der O₂-Indikator signalisiert lediglich das Überschreiten einer gewissen O₂-Konzentration.

Ausgehend hiervon war es Aufgabe der vorliegenden Erfindung, ein O₂-Scavenger/Indikator-System, bereitzustellen, welches das Überschreiten einer gewissen O₂-Konzentrationszeitspanne als auch das Überschreiten einer aufgenommenen Sauerstoffmenge des O₂-Scavengers visuell oder messbar signalisieren kann.

Diese Aufgabe wird durch das Verbundsystem mit den Merkmalen des Anspruchs 1 gelöst. Die weiteren abhängigen Ansprüche zeigen vorteilhafte Weiterbildungen auf. In Anspruch 28 wird eine erfindungsgemäße Verwendung angegeben.

Erfindungsgemäß wird ein Verbundsystem enthaltend mindestens eine Trägerschicht und mindestens einen Sauerstoff-Scavenger/-Indikator bereitgestellt, wobei der Sauerstoff-Scavenger/-Indikator mindestens eine Substanz mit kombinierter Scavenger- und Indikatorfunktion für Sauerstoff enthält, die unter Einwirkung von Feuchtigkeit bei basischen Bedingungen Sauerstoff sorbieren kann, wobei die mindestens eine Substanz mit kombinierter Scavenger- und Indikatorfunktion für Sauerstoff durch die Sorption des Sauerstoffs mindestens eine ihrer physikalischen Eigenschaften ändert. Weiter enthält der Indikator eine basisch reagierende Verbindung.

Die Substanz mit kombinierter Scavenger- und Indikatorfunktion für Sauerstoff kann hierbei sowohl alleine als Sauerstoff-Scavenger/-Indikator oder als kombinierter Sauerstoff-Scavenger und Sauerstoff-Scavenger/-Indikator dienen. Dies hängt im Wesentlichen von den Gewichtsanteilen der Substanz mit kombinierter Scavenger- und Indikatorfunktion für Sauerstoff und den weiteren im Sauerstoff-Scavenger/- Indikator enthaltenden Komponenten ab.

Die zugesetzte basisch reagierende Verbindung bewirkt, dass ein basisches Milieu erzeugt wird, in dem dann die Substanz mit kombinierter Scavenger- und Indikatorfunktion für Sauerstoff den Sauerstoff sorbieren kann. Im trockenen Zustand kommt es dagegen aufgrund des fehlenden basischen Milieus zu keiner Sauerstoff-Sorption. Als Trigger für die Reaktion mit Sauerstoff dient vorzugsweise Wasser, d.h. die in der Umgebung befindliche Luftfeuchte. Durch Luftfeuchte löst sich die basisch reagierende Verbindung unter Herstellung eines basischen Milieus. Durch das Überschreiten einer gewissen relativen Luftfeuchtigkeit kommt es somit zur Initialisierung des Systems, wobei die relative Luftfeuchte der Initialisierung durch die Wahl der basisch reagierenden Verbindung und/oder des Elektrolyten bestimmt werden kann. Ein typischer Wert bei der Verwendung von NaCl als Elektrolyten für die Auslösung des Systems liegt bei ≥ 75 % relative Luftfeuchte.

Die Substanz mit kombinierter Scavenger- und Indikatorfunktion für Sauerstoff kann unter Sauerstoff-Exposition in einem basischen Milieu mindestens einen seiner physikalischen Parameter ändern. Hinsichtlich der hier genannten physikalischen Eigenschaften bestehen keinerlei Beschränkungen, sofern sie eine visuelle oder messtechnisch auswertbare Änderung der Substanz mit kombinierter Scavenger- und Indikatorfunktion für Sauerstoff darstellen.

Als physikalische Eigenschaften sind hierbei insbesondere der Magnetismus, die elektrische Leitfähigkeit und elektromagnetische Absorption der Substanz mit kombinierter Scavenger- und Indikatorfunktion für Sauerstoff zu nennen. Die elektromagnetische Absorption bezieht sich dabei insbesondere auf den Mikrowellen-, den IR-, den VIS- oder den UV-Bereich, sodass die Änderungen der elektromagnetischen Absorption in diesem Wellenlängenbereich durch entsprechende aus dem Stand der Technik bekannte Detektionsmethoden vorgenommen werden können.

Eine erste erfindungsgemäße Variante sieht vor, dass die Substanz mit kombinierter Scavenger- und Indikatorfunktion für Sauerstoff magnetische Eigenschaften aufweist oder magnetisierbar ist. Die dabei auftretende Veränderung der Permeabilität oder der Remanenz kann dann z.B. durch einen Sensor detektiert werden. Für die Remanenz wird hier ein Magnetometer verwendet, während die Änderung der Permeabilität mittels einer Induktivitätsmessung detektierbar ist.

Eine weitere bevorzugte Variante sieht vor, dass die Substanz mit kombinierter Scavenger- und Indikatorfunktion für Sauerstoff elektrisch leitende Eigenschaften besitzt und durch die Exposition gegenüber Sauerstoff und die damit verbundene Sorption des Sauerstoffs die elektrisch leitenden Eigenschaften erhöht bzw. reduziert. Eine derartige Veränderung der elektrischen Leitfähigkeit kann dann mit Hilfe eines Sensors detektiert werden. Die Einkopplung des Stroms erfolgt dabei auf induktivem oder kapazitivem Weg. Die Detektion bei der induktiven Einkopplung kann vorzugsweise mittels Wirbelstrommesstechnik erfolgen. Im Falle der kapazitiven Einkopplung kann eine Detektion vorzugsweise nach dem Kondensator-Prinzip erfolgen.

Eine weitere bevorzugte Variante hinsichtlich der physikalischen Eigenschaften betrifft die elektromagnetische Absorption der Substanz mit kombinierter Scavenger- und Indikatorfunktion für Sauerstoff. Durch die Sorption des Sauerstoffs kommt es hierbei zu einer veränderten elektromagnetischen Absorption der Substanz mit kombinierter Scavenger- und Indikatorfunktion für Sauerstoff, was wiederum mittels eines entsprechenden Detektors bestimmt werden kann. Vorzugsweise werden hier der UV- bzw. IR-Bereich für die Detektion herangezogen, wobei als Detektoren Photometer bzw. IR-Messgeräte fungieren. Im VIS-Bereich ebenso wie im Mikrowellenbereich ist aber eine Detektion in gleicher Weise möglich.

Die erfindungsgemäßen Sauerstoff-Scavenger/- Indikatoren basieren auf Materialien, welche sowohl die O₂-Scavenger- als auch die O₂-Indikatorfunktion in sich vereinigen. Somit besitzt der O₂-Scavenger und der O₂-Indikator die gleiche Reaktionskinetik.

Für das erfundene kombinierte System bedeutet dies den weiteren Vorteil, dass die Korrelation der aufgenommenen Sauerstoffmenge des O₂-Scavengers mit dem Farbumschlag des O₂-Indikators unabhängig von der Temperatur ist.

Ein System mit einem Material für die O₂-Scavengerfunktion und einem weiteren Material für die O₂-Indikatorfunktion besitzt im Gegensatz hierzu zwei Reaktionskinetiken und somit zwei unterschiedliche Temperaturabhängigkeiten. Dies bedeutet, dass die Korrelation der Restkapazität des O₂-Scavengers mit dem Farbumschlag des O₂-Indikators temperaturabhängig ist.

Vorzugsweise ist die Substanz mit kombinierter Scavenger- und Indikatorfunktion für Sauerstoff ausgewählt aus der Gruppe bestehend aus Hydrochinon, Resorcein, Benzcatechin, Salicylsäure, Pyrogallol, Gallussäure sowie deren Salze und Derivate. Ebenso ist es bevorzugt Polyhydroxycyclohexen, Polyhydroxybenzoesäure sowie deren Salze und Derivate auszuwählen.

Vorzugsweise ist die mit Wasser basisch reagierende Verbindung ausgewählt aus der Gruppe bestehend aus Alkali- und Erdalkalimetallhalogeniden, metallischen und nicht-metallischen Sulfaten und Phosphaten und nicht-metallischen Halogeniden.

Die mindestens eine basisch reagierende Verbindung ist bevorzugt ausgewählt aus der Gruppe der Hydroxide, Carbonate, Sulfide, Thiosulfate, Oxide, Phosphate, Polyphosphate der Alkali- oder Erdalkalimetalle. Ebenso sind Alkali- oder Erdalkalimetallsalze organischer Säuren bevorzugt. Es ist aber ebenso möglich, beliebig andere mit Wasser basisch reagierende Verbindungen zu verwenden. Besonders bevorzugt enthält der Sauerstoff-Scavenger/-Indikator Magnesiumhydroxid oder Natriumthiosulfat als basisch reagierende Verbindung.

In einer weiteren bevorzugten Variante kann der Sauerstoff-Scavenger/-Indikator zusätzlich als weiteres Additiv mindestens einen Elektrolyten enthalten. Der Elektrolyt ist dabei vorzugsweise ausgewählt aus der Gruppe der Metallhalogenide. Als Metalle sind hierbei Lithium, Natrium, Kalium, Magnesium, Calcium und Barium bevorzugt, während als Halogenide Chlor, Brom, Jod und Fluor vorzugsweise eingesetzt werden. Besonders bevorzugtes Halogenid ist hierbei das Chlorid.

Auch hier können jedoch beliebig andere aus dem Stand der Technik bekannte Elektrolyten eingesetzt werden, die den Elektronentransfer der Redoxreaktion unterstützen. Beispielhaft seien hier metallische und nicht-metallische Sulfate und Phosphate, aber auch nicht-metallische Halogenide, wie Ammoniumchlorid, genannt.

Diese Elektrolyte können sowohl in flüssiger wie in fester Form vorliegen.

Eine weitere bevorzugte Variante sieht vor, dass der Sauerstoff-Scavenger/-Indikator einen Polymer- und/oder Gel-Elektrolyten enthält. Als Polymer-Elektrolyte sind insbesondere Polymere in Kombination mit Salzen einsetzbar, wie z.B. Polyethylenoxid (PEO) mit LiPF₆, Polypropylenoxid (PPO) mit LiCF₃SO₃ oder Polyesteroxid mit LiClO₄ und gegebenenfalls TiO₂. Als Gel-Elektrolyte werden besonders bevorzugt Systeme aus Polyether, Polycarbonat und LiBF₄, Systeme aus Polyacrylnitril (PAN), Polycarbonat (PC), elektrochromen Polymeren und LiClO₄ und Systeme aus Polyvinylchlorid (PVC), Dioctyladipat (DOA) und LiN(SO₂CF₃)₂ eingesetzt.

Eine bevorzugte Ausführungsform des erfindungsgemäßen Sauerstoff-Scavenger/-Indikators setzt sich aus 75 bis 99 Gew.-% der mindestens einen Substanz mit kombinierter Scavenger- und Indikatorfunktion für Sauerstoff, und 1 bis 25 Gew.-% der mindestens einen mit Wasser basisch reagierenden Verbindung zusammen. Diese Angaben beziehen sich auf das Gesamtgewicht des Sauerstoff-Scavenger/-Indikators.

Eine andere bevorzugte Ausführungsform des erfindungsgemäßen Sauerstoff-Scavenger/-Indikators besteht zu 75 bis 98,5 Gew.-% aus dem mindestens einen Sauerstoff-Sor-bens, zu 1 bis 15 Gew.-% aus der mindestens einen basisch reagierenden Verbindung und zu 0,5 bis 10 Gew.-% aus dem mindestens einen Elektrolyten.

Der erfindungsgemäße Sauerstoff-Scavenger/-Indikator weist die Besonderheit auf, dass über das Gewichtsverhältnis der Substanz mit kombinierter Scavenger- und Indikatorfunktion für Sauerstoff zu der basisch reagierenden Verbindung und gegebenenfalls, falls vorhanden, dem Elektrolyten, so einstellbar ist, dass der Sauerstoff-Scavenger/-Indikator zu einem definierten Zeitpunkt, der die Restkapazität der Substanz mit kombinierter Scavenger- und Indikatorfunktion für Sauerstoff anzeigt, mindestens eine seiner physikalischen Eigenschaften ändert. Hierzu zählt insbesondere ein Farbumschlagspunkt.

Eine weitere erfindungsgemäße Variante sieht vor, dass das Gewichtsverhältnis der Substanz mit kombinierter Scavenger- und Indikatorfunktion für Sauerstoff zu der basisch reagierenden Verbindung und gegebenenfalls dem Elektrolyten so eingestellt ist, dass der Sauerstoff-Scavenger/-Indikator zu einem definierten Zeitpunkt, der das Überschreiten einer bestimmten Sauerstoff-Konzentration anzeigt, mindestens eine seiner physikalischen Eigenschaften ändert. Hierzu zählt wiederum bevorzugt ein Farbumschlagspunkt.

Eine dritte Variante sieht vor, dass das Gewichtsverhältnis der Substanz mit kombinierter Scavenger- und Indikatorfunktion für Sauerstoff zu der mindestens einen basisch reagierenden Verbindung und gegebenenfalls dem mindestens einen Elektrolyten so eingestellt ist, dass der Sauerstoff-Scavenger/-Indikator eine Änderung seiner physikalischen Eigenschaften zu einem definierten Zeitpunkt aufweist, der das Überschreiten einer bestimmten Sauerstoff-Konzentrationszeitspanne anzeigt, aufweist. Als bevorzugte physikalische Eigenschaft gilt auch hier die elektromagnetische Absorption, d.h. die Änderung der Farbe des Sorbens. Durch den Farbumschlagspunkt soll visuell oder mit Hilfe einer Messung eine definierte Restkapazität der Substanz mit kombinierter Scavenger- und Indikatorfunktion für Sauerstoff signalisiert werden.

Alle drei zuvor genannten erfindungsgemäßen Varianten können natürlich auch miteinander kombiniert werden. Weiterhin ist es bevorzugt, dass mindestens einer der Bestandteile des Sauerstoff-Scavenger/-Indikators in gekapselter Form enthalten ist. Hierzu zählt insbesondere, dass der Sauerstoff-Scavenger/-Indikator Wasser in gekapselter Form enthält. Derartige Wasserkapseln können dann durch mechanische Beanspruchung zerstört werden, wodurch das in der Kapsel enthaltende Wasser freigesetzt wird und als Träger für den Sauerstoff-Scavenger/-Indikator dient.

Grundsätzlich kann der Sauerstoff-Scavenger/- Indikator in zwei Varianten vorliegen, d.h. als nicht-sichtbare und sichtbare Variante. Die sichtbare Variante ermöglicht dabei eine visuelle Wahrnehmung und Auswertung, was im Hinblick auf qualitative Auswertungen in der Regel ausreichend ist. Die nicht-sichtbare Variante basiert wiederum auf der Änderung anderer physikalischer Eigenschaften, die - wie zuvor beschrieben - mit entsprechenden Messinstrumenten ausgewertet werden und so auch zusätzlich quantitative Ergebnisse liefern können. Besonders für den Verpacker als auch den Vertreiber von Produkten, z.B. Lebensmitteln, ist auch die Information wichtig, wie sich die Kopfraumatmosphäre in der Verpackung verhält. Desweiteren ist mit der Etablierung von aktiven Verpackungen mit O₂-Scavengern das Wissen nach der Restzehrkapazität der Verpackung, z.B. zum Zeitpunkt des Verpackens, von höchstem Interesse. Diese Erfordernisse können mit den beschriebenen erfindungsgemäßen Indikator-Systemen hervorragend gelöst werden. Erfindungsgemäß wird ein Verbundsystem bereitgestellt, das mindestens eine Trägerschicht und mindestens einen Sauerstoff-Scavenger/-Indikator enthält, welcher mindestens eine Substanz mit kombinierter Scavenger- und Indikatorfunktion für Sauerstoff, die unter Einwirkung von Feuchtigkeit bei basischen Bedingungen Sauerstoff sorbiert, wobei mindestens ein Bestandteil des Indikators mindestens eine seiner physikalischen Eigenschaften ändert, sowie mindestens eine basisch reagierende Verbindung, enthält.

Vorzugsweise ist dabei der mindestens eine Sauerstoff-Scavenger/-Indikator zwischen der mindestens einen Trägerschicht und der mindestens einen weiteren Schicht sandwichartig eingeschlossen. Der mindestens eine Sauerstoff-Scavenger/-Indikator kann dabei z.B. in fester, disperser oder gelöster Form punktförmig zwischen der mindestens einen Trägerschicht und der mindestens einen weiteren Schicht angeordnet sein. Ebenso ist es möglich, dass der mindestens eine Sauerstoff-Scavenger/-Indikator in fester, disperser oder gelöster Form flächig zwischen der mindestens einen Trägerschicht und der mindestens einen weiteren Schicht, z.B. in Form einer Folie, angeordnet ist.

Der mindestens eine Sauerstoff-Scavenger/-Indikator kann in eine Polymerschicht, z.B. aus Polyethylen, eingebettet sein. Ebenso ist es möglich, dass der mindestens eine Sauerstoff-Scavenger/-Indikator in einer Kaschierklebstoffschicht, einer Lackschicht oder Druckfarbschicht eingebettet ist.

Die mindestens eine weitere Schicht kann durch Schäumen und/oder Recken modifiziert werden. Auf diese Weise gelingt es, nachträglich die Sauerstoffpermeabilität des Verbundsystems zu beeinflussen.

Vorzugsweise liegt die mindestens eine Substanz mit kombinierter Scavenger- und Indikatorfunktion für Sauerstoff in fester, disperser oder gelöster Form vor.

Die beschriebenen Verbundsysteme eigenen sich hervorragend als Verpackungsfolien für beliebiges Verpackungsgut, insbesondere Lebensmittel, sowie als Einzelfolie innerhalb eines elektrischen oder elektronischen Geräts.

Die Anwendungsfelder betreffen dabei die Lebensmittelindustrie, pharmazeutische Produkte und Geräte, die Elektronikindustrie, die chemische Industrie aber auch kulturelle und militärische Bereiche.

Anhand der nachfolgenden Beispiele sollen verschiedene Varianten des erfindungsgemäßen Gegenstands dargestellt werden, ohne diesen auf die hier gezeigten Ausführungsformen zu beschränken.

### Beispiel 1

### Sauerstoffzehrende/-anzeigende Probenmischung (Gallussäure + NaOH)

Ein Pulver-System basierend auf Gallussäure und NaOH bindet Sauerstoff. Bei diesem System wird dem Anwender der Beginn der Sauerstoffsorption durch einen Farbumschlag von weiß nach dunkelrot angezeigt. Der Scavenger/Indikator wird dabei durch Feuchte aktiviert. Das System ändert die Farbe nach einer aufgenommenen Sauerstoffmenge von etwa 10 cm³/g.

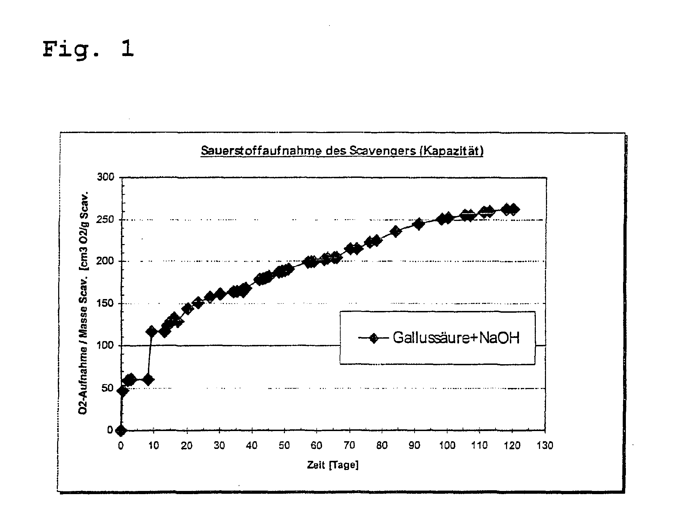

Fig. 1 zeigt die Sauerstoffaufnahme über die Zeit des O₂-Scavengers/-Indikators basierend auf Gallussäure und NaOH, wobei das System in Pulverform vorliegt.

### Beispiel 2

### Sauerstoffzehrende/-anzeigender Packstoff (PET/SiOₓ/KK(Gallussäure, CaO, NaCl)/PA)

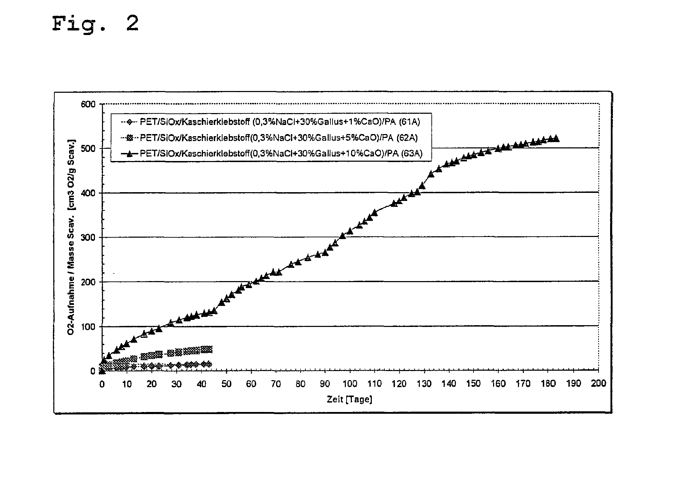

In Fig. 2 ist die Charakterisierung des Systems aus Gallussäure und CaO, eingearbeitet in einen Kaschierklebstoff, dargestellt. Das hergestellte Multischichtsystem hat den Aufbau Polyethylenterephthalat (PET)/SiOₓ/Kaschierklebstoff/Polyamid (PA). Es weist den Anwender durch einen Farbumschlag von transparent nach dunkellila daraufhin, dass der O₂-Scavenger aktiv ist. Die Funktionen werden durch das Vorhandensein von Feuchte aktiviert. Die Reaktion benötigt damit Feuchte und ein basisches Milieu, wobei dieses basische Milieu durch die Reaktion von Wasser mit Calciumoxid zu Calciumhydroxid erreicht wird.

## Patentansprüche

1. Verbundsystem enthaltend
a) mindestens eine Trägerschicht und
b) mindestens einen Sauerstoff-Scavenger/- Indikator enthaltend mindestens eine Substanz mit kombinierter Scavenger- und Indikatorfunktion für Sauerstoff, die unter Einwirkung von Feuchtigkeit bei basischen Bedingungen Sauerstoff sorbiert, wobei die mindestens eine Substanz mindestens eine ihrer physikalischen Eigenschaften ändert, sowie mindestens eine basisch reagierende Verbindung.

2. Verbundsystem nach Anspruch 1, **dadurch gekennzeichnet, dass** sich der Magnetismus, die elektrische Leitfähigkeit und/oder die elektromagnetische Absorption der Substanz mit kombinierter Scavenger- und Indikatorfunktion für Sauerstoff bei der Sorption ändert.

3. Verbundsystem nach Anspruch 2, **dadurch gekennzeichnet, dass** die elektromagnetische Absorption den Mikrowellen-, den IR-, den VIS- oder den UV-Bereich betrifft.

4. Verbundsystem nach einem der vorhergehenden Ansprüche, **dadurch gekennzeichnet, dass** die Änderung mindestens einer physikalischen Eigenschaft ein Farbumschlag ist.

5. Verbundsystem nach einem der vorhergehenden Ansprüche, **dadurch gekennzeichnet, dass** die Substanz mit kombinierter Scavenger- und Indikatorfunktion für Sauerstoff eine aromatische Verbindung ist.

6. Verbundsystem nach Anspruch 5, **dadurch gekennzeichnet, dass** das Substanz mit kombinierter Scavenger- und Indikatorfunktion für Sauerstoff ausgewählt ist aus der Gruppe bestehend aus Polyhydroxycyclohexen und Polyhydroxybenzoesäure sowie deren Salze und Derivate.

7. Verbundsystem nach Anspruch 5, **dadurch gekennzeichnet, dass** die Substanz mit kombinierter Scavenger- und Indikatorfunktion für Sauerstoff ausgewählt ist aus der Gruppe bestehend aus Hydrochinon, Benzcatechin, Salicylsäure, Pyrogallol, Gallussäure, Propylgallate sowie deren Salze und Derivate.

8. Verbundsystem nach einem der vorhergehenden Ansprüche, **dadurch gekennzeichnet, dass** der Sauerstoff-Scavenger/-Indikator mindestens eine mit Wasser basisch reagierende Verbindung enthält.

9. Verbundsystem nach einem der vorhergehenden Ansprüche, **dadurch gekennzeichnet, dass** die mindestens eine mit Wasser basisch reagierende Verbindungen ausgewählt ist aus der Gruppe der Hydroxide, Carbonate, Sulfite, Thiosulfate, Oxide, Phosphate, Polyphosphate der Alkali- oder Erdalkalimetalle und Alkali- oder Erdalkalimetall-Salze organischer Säuren.

10. Verbundsystem nach Anspruch 9, **dadurch gekennzeichnet, dass** die mindestens eine mit Wasser basisch reagierende Verbindungen Magnesiumhydroxid, Natriumthiosulfat und/oder Calciumoxid ist.

11. Verbundsystem nach einem der vorhergehenden Ansprüche, **dadurch gekennzeichnet, dass** der Sauerstoff-Scavenger/-Indikator als weiteres Additiv mindestens einen Elektrolyten enthält.

12. Verbundsystem nach Anspruch 11, **dadurch gekennzeichnet, dass** der Elektrolyt ausgewählt ist aus der Gruppe der Alkali- und Erdalkalimetallhalogenide, der metallischen und nicht-metallischen Sulfate und Phosphate und der nicht-metallischen Halogenide.

13. Verbundsystem nach Anspruch 12, **dadurch gekennzeichnet, dass** die Metalle ausgewählt sind aus Lithium, Natrium, Kalium, Magnesium, Calcium und Barium und die Halogenide ausgewählt sind aus Chlor, Brom, Jod und Fluor.

14. Verbundsystem nach einem der Ansprüche 11 bis 13, **dadurch gekennzeichnet, dass** der Elektrolyt ein Polymerelektrolyt mit Salzen ist.

15. Verbundsystem nach einem der Ansprüche 11 bis 13, **dadurch gekennzeichnet, dass** der Elektrolyt ein Gelelektrolyt ist.

16. Verbundsystem nach einem der vorhergehenden Ansprüche, **dadurch gekennzeichnet, dass** der Sauerstoff-Scavenger/-Indikator zu 75 bis 99 Gew.-% aus der mindestens einen Substanz mit kombinierter Scavenger- und Indikatorfunktion für Sauerstoff und zu 1 bis 25 Gew.-% aus der mindestens einen basisch reagierenden Verbindung besteht.

17. Verbundsystem nach mindestens einem der Ansprüche 1 bis 15, **dadurch gekennzeichnet, dass** der Sauerstoff-Scavenger/-Indikator zu 75 bis 98,5 Gew.-% aus der mindestens einen Substanz mit kombinierter Scavenger- und Indikatorfunktion für Sauerstoff, zu 1 bis 15 Gew.-% aus der mindestens einen basisch reagierenden Verbindung und zu 0,5 bis 10 Gew.-% aus dem mindestens einen Elektrolyten besteht.

18. Verbundsystem nach mindestens einem der vorhergehenden Ansprüche, **dadurch gekennzeichnet, dass** der Sauerstoff-Scavenger/-Indikator sichtbar ist.

19. Verbundsystem nach einem der vorhergehenden Ansprüche, **dadurch gekennzeichnet, dass** mindestens einer der Bestandteile des Sauerstoff-Scavengers/-Indikators in gekapselter Form vorliegt.

20. Verbundsystem nach einem der vorhergehenden Ansprüche, **dadurch gekennzeichnet, dass** der mindestens eine Sauerstoff-Scavenger/-Indikator zwischen mindestens einer Trägerschicht und mindestens einer weiteren Schicht sandwichartig eingeschlossen ist.

21. Verbundsystem nach Anspruch 20, **dadurch gekennzeichnet, dass** die mindestens eine Trägerschicht eine Barriereschicht für Sauerstoff darstellt und die mindestens eine weitere Schicht zumindest teilweise durchlässig für Sauerstoff ist.

22. Verbundsystem nach mindestens einem der Ansprüche 20 oder 21, **dadurch gekennzeichnet, dass** die mindestens eine weitere Schicht durch Schäumen und/oder Recken modifiziert ist.

23. Verbundsystem nach mindestens einem der Ansprüche 20 bis 22, **dadurch gekennzeichnet, dass** der mindestens eine Sauerstoff-Scavenger/-Indikator in fester, disperser oder gelöster Form punktförmig zwischen der mindestens einen Trägerschicht und der mindestens einen weiteren Schicht angeordnet ist.

24. Verbundsystem nach mindestens einem der Ansprüche 20 bis 23, **dadurch gekennzeichnet, dass** der mindestens eine Sauerstoff-Scavenger/-Indikator in fester, disperser oder gelöster Form flächig zwischen der mindestens einen Trägerschicht und der mindestens einen weiteren Schicht angeordnet ist.

25. Verbundsystem nach einem der vorhergehenden Ansprüche, **dadurch gekennzeichnet, dass** der mindestens eine Sauerstoff-Scavenger/-Indikator in einer Polymerschicht eingebettet ist.

26. Verbundsystem nach einem der vorhergehenden Ansprüche, **dadurch gekennzeichnet, dass** der mindestens eine Sauerstoff-Scavenger/-Indikator in einer Kaschierklebstoffschicht, in einer Lackschicht oder in einer Druckfarbschicht eingebettet ist.

27. Verbundsystem nach mindestens einem der Ansprüche 20 bis 24, **dadurch gekennzeichnet, dass** die den mindestens einen Sauerstoff-Scavenger/- Indikator enthaltende Schicht und/oder die mindestens eine weitere Schicht durch Zusatz von polaren oder unpolaren Additiven modifiziert ist.

28. Verbundsystem nach einem der vorhergehenden Ansprüche in Form einer Verpackungsfolie oder partiell applizierter Einzelfolie.

29. Verwendung des Verbundsystems nach einem der vorhergehenden Ansprüche als Verpackungsfolie für Lebensmittel.

## Claims

1. Composite system containing
a) at least one carrier layer and
b) at least one oxygen scavenger/indicator containing at least one substance with combined scavenger and indicator function for oxygen, which sorbs oxygen under the effect of moisture in basic conditions, the at least one substance changing at least one of its physical properties, and also at least one basically reacting compound.

2. Composite system according to claim 1, **characterised in that** the magnetism, electrical conductivity and/or electromagnetic absorption of the substance with combined scavenger and indicator function for oxygen changes during the sorption.

3. Composite system according to claim 2, **characterised in that** the electromagnetic absorption relates to the microwave, IR, visible or UV range.

4. Composite system according to one of the preceding claims, **characterised in that** the change in at least one physical property is a colour change.

5. Composite system according to one of the preceding claims, **characterised in that** the substance with combined scavenger and indicator function for oxygen is an aromatic compound.

6. Composite system according to claim 5, **characterised in that** the substance with combined scavenger and indicator function for oxygen is selected from the group comprising polyhydroxycyclohexene and polyhydroxybenzoic acid and also the salts and derivatives thereof.

7. Composite system according to claim 5, **characterised in that** the substance with combined scavenger and indicator function for oxygen is selected from the group comprising hydroquinone, benzcatechin, salicylic acid, pyrogallol, gallic acid, propyl gallates and also the salts and derivatives thereof.

8. Composite system according to one of the preceding claims, **characterised in that** oxygen scavenger/indicator contains at least one compound which reacts basically with water.

9. Composite system according to one of the preceding claims, **characterised in that** the at least one compound which reacts basically with water is selected from the group of hydroxides, carbonates, sulphites, thiosulphates, oxides, phosphates, polyphosphates of the alkali or alkaline earth metals and alkali or alkaline earth metal salts of organic acids.

10. Composite system according to claim 9, **characterised in that** the at least one compound which reacts basically with water is magnesium hydroxide, sodium thiosulphate and/or calcium oxide.

11. Composite system according to one of the preceding claims, **characterised in that** the oxygen scavenger/indicator contains at least one electrolyte as further additive.

12. Composite system according to claim 11, **characterised in that** the electrolyte is selected from the group of alkali and alkaline earth metal halogenides, the metallic and non-metallic sulphates and phosphates and the non-metallic halogenides.

13. Composite system according to claim 12, **characterised in that** the metals are selected from lithium, sodium, potassium, magnesium, calcium and barium and the halogenides are selected from chlorine, bromine, iodine and fluorine.

14. Composite system according to one of the claims 11 to 13, **characterised in that** the electrolyte is a polymer electrolyte with salts.

15. Composite system according to one of the claims 11 to 13, **characterised in that** the electrolyte is a gel electrolyte.

16. Composite system according to one of the preceding claims, **characterised in that** the oxygen scavenger/indicator comprises up to 75 to 99% by weight of the at least one substance with combined scavenger and indicator function for oxygen and up to 1 to 25% by weight of the at least one basically reacting compound.

17. Composite system according to at least one of the claims 1 to 15, **characterised in that** the oxygen scavenger/indicator comprises up to 75 to 98.5% by weight of the at least one substance with combined scavenger and indicator function for oxygen, up to 1 to 15% by weight of the at least one basically reacting compound and up to 0.5 to 10% by weight of the at least one electrolyte.

18. Composite system according to one of the preceding claims, **characterised in that** the oxygen scavenger/indicator is visible.

19. Composite system according to one of the preceding claims, **characterised in that** at least one of the components of the oxygen scavenger/indicator is present in encapsulated form.

20. Composite system according to one of the preceding claims, **characterised in that** the at least one oxygen scavenger/indicator is enclosed between at least one carrier layer and at least one further layer in the manner of a sandwich.

21. Composite system according to claim 20, **characterised in that** the at least one carrier layer represents a barrier layer for oxygen and the at least one further layer is at least partially permeable for oxygen.

22. Composite system according to at least one of the claims 20 or 21, **characterised in that** the at least one further layer is modified by foaming and/or stretching.

23. Composite system according to at least one of the claims 20 to 22, **characterised in that** the at least one oxygen scavenger/indicator is disposed in solid, disperse or dissolved form at points between the at least one carrier layer and the at least one further layer.

24. Composite system according to at least one of the claims 20 to 23, **characterised in that** the at least one oxygen scavenger/indicator is disposed in solid, disperse or dissolved form in a planar manner between the at least one carrier layer and the at least one further layer.

25. Composite system according to one of the preceding claims, **characterised in that** the at least one oxygen scavenger/indicator is embedded in a polymer layer.

26. Composite system according to one of the preceding claims, **characterised in that** the at least one oxygen scavenger/indicator is embedded in an adhesive backing layer, in a paint layer or in a printed ink layer.

27. Composite system according to at least one of the claims 20 to 24, **characterised in that** the layer which contains at least one oxygen scavenger/indicator, and/or the at least one further layer is modified by the addition of polar or non-polar additives.

28. Composite system according to one of the preceding claims in the form of a packaging film or partially applied individual film.

29. Use of the composite system according to one of the preceding claims as packaging film for foodstuffs.

## Revendications

1. Système composite contenant
a) au moins une couche support et
b) au moins un piège/indicateur d'oxygène contenant au moins une substance avec une fonction combinée de piège et d'indicateur pour l'oxygène, qui absorbe l'oxygène sous l'effet de l'humidité dans des conditions basiques, l'au moins une substance modifiant au une de ses propriétés physiques, ainsi
qu'au moins un composé régissant de manière basique.

2. Système composite selon la revendication 1, **caractérisé en ce que** le magnétisme, la conductivité électrique et/ou l'absorption électromagnétique de la substance avec la fonction combinée de piège et d'indicateur pour l'oxygène se modifie avec la sorption.

3. Système composite selon la revendication 2, **caractérisé en ce que** l'absorption électromagnétique concerne le domaine des micro-ondes, IR, VIS ou UV.

4. Système composite selon l'une des revendications précédentes, **caractérisé en ce que** la modification d'au moins une propriété physique est un virage de couleur.

5. Système composite selon l'une des revendications précédentes, **caractérisé en ce que** la substance avec fonction combinée de piège et d'indicateur pour l'oxygène est un composé aromatique.

6. Système composite selon la revendication 5, **caractérisé en ce que** la substance avec fonction combinée de piège et d'indicateur pour l'oxygène est sélectionnée dans le groupe constitué du polyhydroxycyclohexène et de l'acide polyhydroxybenzoïque ainsi que de leurs sels et dérivés.

7. Système composite selon la revendication 5, **caractérisé en ce que** la substance avec fonction combinée de piège et d'indicateur pour l'oxygène est sélectionnée dans le groupe constitué de l'hydrochinone, de la benzcatéchine, de l'acide salicylique, du pyrogallol, de l'acide gallique, du propylgallate ainsi que de leurs sels et dérivés.

8. Système composite selon la revendication 5, **caractérisé en ce que** le piège/indicateur d'oxygène contient au moins un composé réagissant de manière basique avec l'eau.

9. Système composite selon l'une des revendications précédentes, **caractérisé en ce que** l'au moins un composé réagissant de manière basique avec l'eau est sélectionné dans le groupe constitué d'hydroxydes, de carbonates, de sulfites, de thiosulfates, d'oxydes, de phosphates, de polyphosphates de métaux alcalins ou alcalino-terreux et de sels de métaux alcalins ou alcalino-terreux d'acides organiques.

10. Système composite selon la revendication 9, **caractérisé en ce que** l'au moins un composé réagissant de manière basique avec l'eau est de l'hydroxyde de magnésium, du thiosulfate de sodium et/ou de l'oxyde de calcium.

11. Système composite selon l'une des revendications précédentes, **caractérisé en ce que** le piège/indicateur d'oxygène contient au moins un électrolyte en tant qu'additif supplémentaire.

12. Système composite selon la revendication 11, **caractérisé en ce que** l'électrolyte est sélectionné dans le groupe constitué d'halogènes métalliques alcalins ou alcalino-terreux, de sulfates et de phosphates métalliques et non métalliques et d'halogènes non métalliques.

13. Système composite selon la revendication 12, **caractérisé en ce que** les métaux sont sélectionnés parmi le lithium, le sodium, le potassium, le magnésium, le calcium et le baryum et les halogènes sont sélectionnés parmi le chlore, le brome, l'iode et le fluor.

14. Système composite selon l'une des revendications 11 à 13, **caractérisé en ce que** l'électrolyte est un électrolyte polymère avec des sels.

15. Système composite selon l'une des revendications 11 à 13, **caractérisé en ce que** l'électrolyte est un électrolyte en gel.

16. Système composite selon l'une des revendications précédentes, **caractérisé en ce que** le piège/indicateur d'oxygène est constitué à 75 à 99% en poids de l'au moins une substance avec fonction combinée de piège et d'indicateur pour l'oxygène et à 1 à 25% en poids de l'au moins un composé réagissant de manière basique.

17. Système composite selon l'une des revendications 1 à 15, **caractérisé en ce que** le piège/indicateur d'oxygène est constitué à 75 à 98,5% en poids de l'au moins une substance avec fonction combinée de piège et d'indicateur pour l'oxygène et à 1 à 15% en poids de l'au moins un composé réagissant de manière basique et de 0,5 à 10% en poids de l'au moins un électrolyte.

18. Système composite selon l'une des revendications précédentes, **caractérisé en ce que** le piège/indicateur d'oxygène est visible.

19. Système composite selon l'une des revendications précédentes, **caractérisé en ce qu'**au moins un des composants du piège/indicateur d'oxygène se présente sous forme encapsulée.

20. Système composite selon l'une des revendications précédentes, **caractérisé en ce que** l'au moins un piège/indicateur d'oxygène est intégré en sandwich entre au moins une couche support et au moins une couche supplémentaire.

21. Système composite selon la revendication 20, **caractérisé en ce que** l'au moins une couche support constitue une couche de barrière pour l'oxygène et l'au moins une couche supplémentaire est au moins partiellement perméable à l'oxygène.

22. Système composite selon au moins l'une des revendications 20 ou 21, **caractérisé en ce que** l'au moins une couche supplémentaire est modifiée par moussage et/ou étirage.

23. Système composite selon au moins l'une des revendications 20 à 22, **caractérisé en ce que** l'au moins un piège/indicateur d'oxygène sous une forme solide, dispersée ou dissoute est disposé ponctuellement entre l'au moins une couche support et l'au moins une couche supplémentaire.

24. Système composite selon au moins l'une des revendications 20 à 23, **caractérisé en ce que** l'au moins un piège/indicateur d'oxygène sous une forme solide, dispersée ou dissoute est disposé à plat entre l'au moins une couche support et l'au moins une couche supplémentaire.

25. Système composite selon l'une des revendications précédentes, **caractérisé en ce que** l'au moins un piège/indicateur d'oxygène est intégré dans une couche de polymère.

26. Système composite selon l'une des revendications précédentes, **caractérisé en ce que** l'au moins un piège/indicateur d'oxygène est intégré dans une couche de colle de stratification, dans une couche de vernis ou dans une couche de couleur d'impression.

27. Système composite selon au moins l'une des revendications 20 à 24, **caractérisé en ce que** l'au moins une couche contenant le piège/indicateur d'oxygène et/ou l'au moins une couche supplémentaire est modifiée par l'ajout d'additifs polaires ou non polaires.

28. Système composite selon l'une des revendications précédentes sous la forme d'un film d'emballage ou d'un film individuel appliqué partiellement.

29. utilisation du système composite selon l'une des revendications précédentes en tant que film d'emballage pour aliments.
